# FASCICULE DE BREVET EUROPEEN

(11) **EP 0 641 469 B1**
(45) Date de publication et mention de la délivrance du brevet: **04.11.1998**
(21) Numéro de dépôt: 94908246.5
(22) Date de dépôt: 14.03.1994
(51) Int. Cl.: G06K 19/077

(54) **PROCEDE DE FABRICATION D'UNE CARTE COMPRENANT AU MOINS UN ELEMENT ELECTRONIQUE**
VERFAHREN ZUR HERSTELLUNG EINER KARTE, DIE MINDESTENS EINEN ELEKTRONISCHEN BAUSTEIN ENTHÄLT
METHOD FOR PRODUCING A CARD WITH AT LEAST ONE ELECTRONIC COMPONENT

(30) Priorité: 17.03.1993 CH 804/93; 30.03.1993 FR 9303822
(43) Date de publication de la demande: 08.03.1995
(73) Titulaire: Droz, François, 2300 La Chaux-de-Fonds (CH)
(72) Inventeur: Droz, François, 2300 La Chaux-de-Fonds (CH)
(74) Mandataire: Patry, Didier Marcel Pierre
(86) Numéro de dépôt international: CH9400056
(87) Numéro de publication internationale: WO9422111

(56) Documents cités:
- EP-A- 0 197 847
- EP-A- 0 326 822
- FR-A- 2 660 092
- GB-A- 2 081 644
- PATENT ABSTRACTS OF JAPAN vol. 10, no. 082 (E-392) 2 Avril 1986 & JP,A,60 227 406 (NIHON ESU ESU AI KAADO KK) 12 Novembre 1985

## Description

La présente invention concerne un procédé de fabrication d'une carte comprenant au moins un élément électronique. Voir aussi la demande WO-A-94/22110 de la même date de dépôt.

La carte obtenue par le procédé selon l'invention peut par exemple être utilisée comme carte bancaire, comme carte d'accès à un espace clos, ou encore en association avec un distributeur de marchandises. Une telle carte peut aussi être utilisée comme moyen d'identification ou de contrôle.

On comprend par carte tout objet ayant une structure sensiblement plane définissant un plan général et présentant un contour quelconque dans ce plan général.

Il est connu de l'homme du métier une carte, comprenant des éléments électroniques, formée d'une coque dans laquelle sont prévus des logements, destinés à recevoir ces éléments électroniques, et d'une couche extérieure protectrice qui ferme les logements.

Il est aussi connu une carte ayant une structure symétrique et formée de deux coques sensiblement semblables, chacune de ces deux coques ayant une surface structurée servant à former des logements, destinés à recevoir des éléments électroniques, lorsque les deux coques sont assemblées.

Le procédé de fabrication de cette dernière carte est généralement le suivant :
- premièrement, chaque coque est fabriquée à l'aide d'une technique d'injection, par exemple par un moulage à chaud.
- deuxièmement, les éléments électroniques sont placés dans l'une des deux coques et l'autre coque est ensuite posée sur la première, le tout étant assemblé par une technique d'assemblage à chaud.

Le procédé de fabrication de la carte décrit ci-avant présente plusieurs inconvénients.

En particulier, après l'assemblage à chaud des deux coques, les éléments électroniques ne remplissent que partiellement les logements. Ceci a pour conséquence que la carte présente, dans les endroits où sont situés les logements, des zones fragiles, spécialement lorsque les éléments électroniques incorporés dans la carte ont des dimensions relativement grandes. C'est ainsi que lorsqu'il est prévu un bobinage d'un diamètre de l'ordre de grandeur de la carte, un tel procédé de fabrication engendre sur les faces extérieures de la carte des zones déformées (bombées ou creuses), ce qui est naturellement néfaste pour la planéité de la carte et pour des impressions pouvant être prévues sur les surfaces extérieures de cette carte.

On connaît encore du document EP-0 350 179 un procédé de fabrication d'une carte consistant à placer dans un moule deux couches extérieures et un ensemble électronique, puis à injecter un matériau de remplissage sous forme liquide dans ce moule. Une fois durci, ce matériau de remplissage forme une couche intermédiaire entre les deux couches extérieures.

Pour augmenter la rapidité de production, il est prévu deux chaînes comprenant chacune plusieurs demi-moules reliés les uns aux autres. Ces deux chaînes sont susceptibles d'avoir un mouvement vertical et de former avec deux demi-moules correspondants, appartenant respectivement aux deux chaînes, un moule présentant une ouverture au moins sur la partie supérieure du moule pour permettre son remplissage. Au-dessus de l'endroit où les deux demi-moules correspondants sont assemblés pour former un moule est prévue une buse permettant d'injecter le matériau de remplissage sous forme liquide dans le moule nouvellement formé.

Le procédé de fabrication d'une carte décrit ci-avant est complexe. De plus, pour de grands débits de production, ce procédé de fabrication nécessite un matériel important, ce qui le rend onéreux.

On notera encore que l'apport de l'ensemble électronique et son positionnement lors de l'injection du matériau de remplissage ne sont nullement décrits dans le document considéré ici et ne sont pas évidents. Il en est de même pour l'apport des couches extérieures dans les demi-moules.

La carte obtenue par le procédé de fabrication décrit ci-avant et telle que décrite dans le document EP-0 350 179 est formée essentiellement de trois couches, à savoir d'une couche intermédiaire et deux couches extérieures. A l'intérieur de la couche intermédiaire est prévu un ensemble électronique formé d'éléments électroniques, d'une bobine disposée sur un propre support et d'un support d'interconnexion, ce support d'interconnexion servant à relier électriquement et rigidement les éléments électroniques et la bobine.

Un inconvénient de cette carte provient du fait que le support d'interconnexion et le support propre à la bobine augmentent l'épaisseur de la carte. Ainsi, il est difficile d'obtenir une carte mince ayant une épaisseur de 0.76 mm prescrite par la norme ISO couramment utilisée pour les cartes bancaires.

On remarquera en outre que le procédé de fabrication proposé pour cette carte n'assure pas que le support d'interconnexion et la couche extérieure voisine soient séparés par une couche du matériau de remplissage, ce qui est néfaste pour la bonne adhérence de cette couche extérieure à la couche intermédiaire. De plus, ce procédé de fabrication ne garantit pas un bon positionnement de l'ensemble électronique au sein de la couche intermédiaire.

Le document EP-A-0 197 847 divulgue encore un procédé de fabrication d'une carte à puce, avec des plages de contact électrique externes, comportant les étapes suivantes :
- apport, sur une surface de travail, d'une structure formant le corps de la carte et constituée d'un matériau fusible, cette structure présentant un évidement débouchant sur sa face principale supérieure qui définit un logement avec un épaulement périphérique présentant un relief dont les creux sont communicants;
- apport d'au moins un élément électronique fixé sur une face d'un substrat dont la face opposée supporte les plages de contact électrique externes, ce substrat étant posé sur le relief et l'élément électronique étant situé dans le logement;
- apport d'énergie servant à ramollir le relief;
- application d'une pression sur ledit substrat jusqu'à ce que les plages de contact soient sensiblement dans le plan de ladite face principale supérieure de la structure;
- introduction d'une colle dans ledit logement par lesdits creux communicants du relief pour terminer l'assemblage du support et de l'élément électronique avec la structure.

La présente invention a pour but de pallier les inconvénients décrits ci-avant en proposant un procédé de fabrication d'une carte permettant de produire des cartes en grande quantité pour un coût bon marché et d'obtenir des cartes pleines sans contact extérieur.

La présente invention concerne donc un procédé dont un premier mode de mise en oeuvre comporte un premier groupe d'étapes comportant les étapes suivantes :
B) apport, sur une surface de travail, d'au moins un élément électronique ;
C) apport, sur ladite surface de travail, d'une structure poreuse ou comprenant un relief dont les creux sont communicants, cette structure étant constituée d'un matériau fusible et définissant une zone de positionnement, et placement de cette structure de manière que ledit élément électronique est situé à l'intérieur de ladite zone de positionnement;
ce premier groupe d'étapes étant suivi d'un deuxième groupe d'étapes comportant les étapes suivantes :
F) apport d'énergie servant à fondre au moins partiellement ladite structure ;
G) application d'une pression sur ladite structure en direction de ladite surface de travail de telle manière que ledit matériau fusible de ladite structure forme une masse dans laquelle est noyé ledit élément électronique; ce deuxième groupe d'étapes étant suivi par une étape de solidification de ladite masse.

On notera que par structure poreuse, on comprend une structure à pores ouverts, c'est-à-dire communiquant entre eux.

Il résulte des caractéristiques mentionnées ci-avant un procédé comportant des étapes simples et permettant de fabriquer un grand nombre de cartes simultanément pour un faible prix. De plus, le premier mode de mise en oeuvre du procédé selon l'invention garantit un positionnement déterminé de l'élément électronique à l'intérieur de la carte fabriquée et permet une évacuation de l'air résiduel lors de ladite étape G.

Grâce à ces avantages, il est possible d'apporter, sur la surface de travail, une structure dont les dimensions en projection sur cette surface de travail correspondent à un ensemble de plusieurs cartes. Dans ce cas-ci, il est prévu un nombre de zones de positionnement correspondant au nombre de cartes fabriquées simultanément et au moins un élément électronique est apporté dans chacune de ces zones de positionnement. Les étapes F et G s'effectuent alors simultanément pour l'ensemble des cartes fabriquées et après solidification, une étape de découpe de chaque carte est prévue. Cette étape de découpe est effectuée de manière que le contour de découpe de chaque carte n'intercepte jamais la zone de positionnement de cette carte.

Les avantages décrits ci-avant découlent également d'un autre mode de 'mise en oeuvre du procédé de fabrication d'une carte selon l'invention. Selon ce mode de mise en oeuvre, le procédé selon l'invention comporte un premier groupe d'étapes comportant les étapes suivantes :
B) apport, sur une surface de travail, d'au moins un élément électronique;
C) apport, sur ladite surface de travail, d'une structure, compressible et formée d'un matériau fusible, de manière que ledit élément électronique est superposé à cette structure et est situé à proximité de cette dernière;
ce premier groupe d'étapes étant suivi par un deuxième groupe d'étapes comportant les étapes suivantes :
E) application d'une pression sur ledit élément électronique de manière que ce dernier pénètre au moins partiellement dans ladite structure;
F) apport d'énergie servant à fondre au moins partiellement ladite structure;
G) application d'une pression sur ladite structure en direction de ladite surface de travail de telle manière que ledit matériau fusible de cette structure forme une masse dans laquelle est noyé ledit élément électronique;
ce deuxième groupe d'étapes étant suivi par une étape de solidification de ladite masse.

Par structure compressible, on comprend une structure présentant une résistance à la compression suffisamment faible pour ne pas endommager l'élément électronique, ou d'autres éléments prévus dans la carte, lors des étapes E et G mentionnées ci-avant.

Selon une variante de l'un ou l'autre des deux modes de mise en oeuvre décrits ci-avant, il est prévu d'apporter en outre sur la surface de travail au moins une couche extérieure. Dans le cas où deux couches extérieures sont prévues, ces dernières sont placées de part et d'autre de la structure. Les étapes F et G servent également à faire adhérer ces deux couches extérieures à la masse formée par la structure fondue une fois cette masse solidifiée.

On notera que lorsqu'aucune couche extérieure n'est prévue, la surface de travail est non-adhérente au matériau fusible fondu de la structure.

Selon une caractéristique particulière du premier mode de mise en oeuvre du procédé selon l'invention décrit ci-avant, la zone de positionnement est définie par une ouverture principale prévue dans la structure. Cette ouverture principale est de préférence traversante, ce qui permet d'obtenir cette ouverture principale par un simple découpage de la structure.

Selon une variante préférée du premier mode de mise en oeuvre, le procédé est caractérisé en ce que ladite structure, une fois apportée, présente, dans un plan sensiblement parallèle à ladite surface de travail, un relief dont les points extrêmes définissent sensiblement un plan parallèle à ladite surface de travail. En particulier, le relief est composé par un ensemble de pyramides.

Il résulte de cette caractéristique particulière au moins trois avantages. Premièrement, lors de la fusion et du remplissage de la zone de positionnement dans laquelle est situé l'élément électronique, la structure assure que l'air situé initialement dans cette zone de positionnement peut aisément être évacué latéralement.

Deuxièmement, dans le cas où une couche extérieure est apportée sur la structure avant les étapes F et G, la structure définit un plan de maintien de cette couche extérieure sensiblement parallèle au plan défini par la surface de travail.

On remarquera que si l'apport d'énergie et l'application de la pression lors des étapes F et G du procédé sont homogènes, la couche extérieure placée sur la structure descend en direction de la surface de travail en restant sensiblement parallèle à celle-ci. Ainsi, la structure évite que la couche extérieure supérieure et, le cas échéant, la couche extérieure inférieure se rétractent ou ondulent. De plus, elle évite que la couche extérieure supérieure forme une cloche englobant l'élément électronique, ce qui serait néfaste pour la planéité de la carte obtenue et pour sa fiabilité.

Troisièmement , la structure garantit le positionnement de l'élément électronique tout au long du procédé de fabrication et donc une position déterminée de cet élément électronique et de tout autre élément prévu dans la carte obtenue par le procédé selon l'invention, bien que la structure soit finalement transformée en une masse pleine dans laquelle sont noyés les divers éléments prévus.

Les mêmes avantages sont obtenus par une structure alvéolée ou formée par un matériau expansé comme une mousse.

Finalement, le procédé de l'invention, selon un troisième mode de mise en oeuvre, comporte un premier groupe d'étapes comportant les étapes suivantes :
B) apport, sur une surface de travail, d'au moins un élément électronique;
C) apport, sur ladite surface de travail, de deux couches, formées chacune d'un matériau compressible et thermo-durcissable, de manière que ledit élément électronique est situé entre ces deux couches;.
ce premier groupe d'étapes étant suivi par un deuxième groupe d'étapes comportant les étapes suivantes :
E) application d'une pression sur les deux couches de manière que ledit élément électronique pénètre dans ces deux couches;
H) apport d'énergie servant à durcir ledit matériau compressible et thermo-durcissable des deux couches de manière que cette dernière forme une masse solide contenant ledit élément électronique.

D'autres caractéristiques et avantages de la présente invention seront également décrits à l'aide de la description suivante, faite en référence aux dessins annexés donnés à titre d'exemples non-limitatifs et dans lesquels :
- les figures 1 et 2 représentent schématiquement une première et une deuxième variante d'un premier mode de mise en oeuvre du procédé selon l'invention;
- les figures 3 et 4 représentent schématiquement une première et une deuxième variante d'un deuxième mode de mise en oeuvre du procédé selon invention;
- les figures 5, 6 et 7 représentent respectivement en coupe des première, deuxième et troisième cartes obtenues par le procédé de fabrication d'une carte selon l'invention;
- la figure 8 représente schématiquement un troisième mode de mise en oeuvre du procédé de fabrication d'une carte selon l'invention.

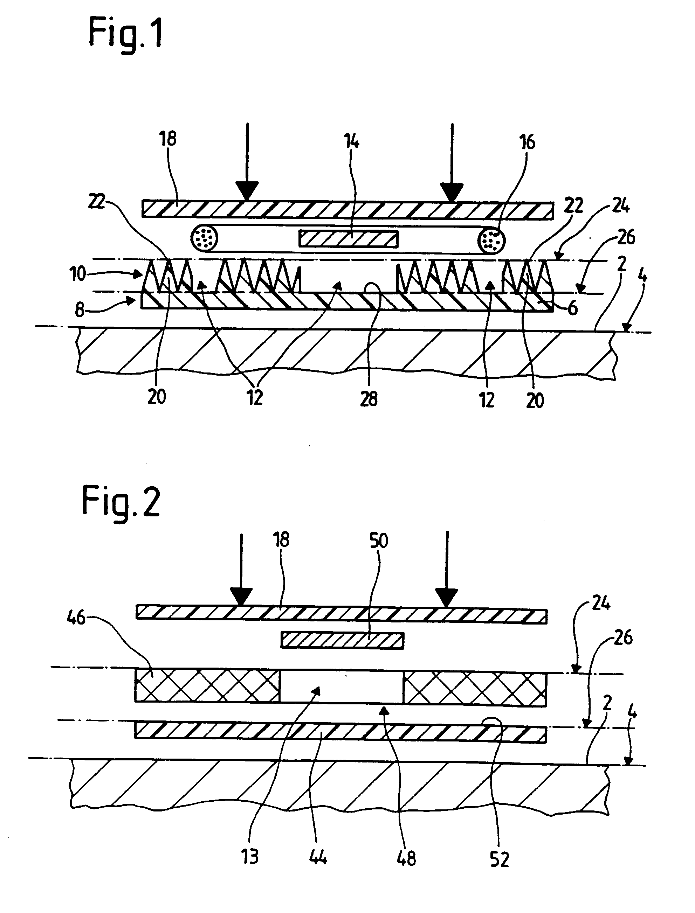

On notera que, dans les divers modes de mise en oeuvre du procédé de fabrication d'une carte selon l'invention représentés aux figures 1, 2, 3, 4 et 8, les divers éléments intervenant sont représentés schématiquement en coupe. Dans chacune de ces figures, le plan de coupe choisi correspond à un plan perpendiculaire au plan général de la carte obtenue par le procédé selon l'invention.

En se référant aux figures 1, 5, 6 et 7, on décrira ci-après un premier mode de mise en oeuvre du procédé de fabrication d'une carte selon l'invention, ainsi que différentes variantes de cartes obtenues par ce premier mode de mise en oeuvre du procédé selon l'invention.

Sur la figure 1 est représenté schématiquement un premier mode de mise en oeuvre du procédé de fabrication d'une carte selon l'invention. Selon ce premier mode de mise en oeuvre, il est prévu d'apporter, sur une surface de travail 2 définissant un plan 4, un support 6. Ce support 6 est formé d'une base 8 définissant une première couche extérieure et d'une structure 10, constituée d'un matériau fusible et définissant une zone de positionnement 12. Un élément électronique 14 et une bobine 16, reliée directement à cet élément électronique 14, sont ensuite apportés et placés dans la zone de positionnement 12. Ensuite, une couche extérieure 18 est apportée et placée sur la structure 10.

La structure 10 est formée par un ensemble de pyramides 20 dont les sommets 22 définissent sensiblement un plan 24 parallèle au plan 4. Cet ensemble de pyramides 20 forme un relief dont les creux sont communicants. La zone de positionnement 12 est comprise entre le plan 26 défini par la surface supérieure 28 de la base 8 et le plan 24.

La zone de positionnement 12 dans laquelle sont placés l'élément électronique 14 et la bobine 16 est agencée de manière que cet élément électronique 14 et cette bobine 16 sont enfermés dans la zone de positionnement 12 une fois que la couche extérieure 18 a été apportée sur la structure 10. De ce fait, l'élément électronique 14 et la bobine 16 sont positionnés à l'intérieur de la structure 10. On notera ici que la base 8 et la structure 10 forment un support 6 en une seule pièce. Cependant, il est possible de prévoir que le matériau fusible constituant la structure 10 soit différent du matériau constituant la base 8.

Suite à l'apport de la couche extérieure 18, il est prévu l'apport d'une presse (schématisée par deux flèches) servant à maintenir la couche extérieure 18 en appui contre les sommets 22 des pyramides 20 formant la structure 10.

Ensuite, il est prévu un apport d'énergie servant à fondre au moins partiellement la structure 10. Parallèlement, une pression est appliquée sur la couche extérieure 18 et par conséquent sur la structure 10. Ainsi, lorsque les pyramides 20 fondent progressivement sous l'apport d'énergie, la couche extérieure 18 descend progressivement en direction de la base 8. On notera ici que la descente de la couche extérieure 18 en direction de la base 8 s'effectue, grâce à la structure 10 prévue, de telle manière que la couche extérieure 18 reste constamment, au cours de cette descente, sensiblement parallèle au plan 26 défini par la base 8.

De ce fait, l'étalement du matériau fusible fondu dans le plan 26 peut s'effectuer de manière homogène. De plus, l'air situé dans la région intermédiaire entre la couche extérieure 18 et la base 8 peut s'évacuer latéralement tout au long de la descente de la couche 18 en direction de la base 8.

On remarquera aussi que l'application d'une pression sur la couche extérieure 18 permet, conjointement avec la structure 10 prévue, d'empêcher que la couche extérieure 18 se rétracte ou ondule sous l'effet de la chaleur, ce qui est très avantageux pour l'obtention d'une carte plane ne présentant aucune irrégularité de surface, ni cintrage.

Ainsi, la structure 10 assure au moins trois fonctions essentielles dans ce premier mode de mise en oeuvre du procédé selon l'invention. La première fonction est le maintien de la couche extérieure 18 dans un plan sensiblement parallèle au plan 26 défini par la base 8 tout au long de l'étape d'apport d'énergie servant à fondre au moins partiellement la structure 10.

La deuxième fonction de la structure 10 consiste à permettre l'évacuation latérale de l'air se trouvant dans la région intermédiaire entre la base 10 et la couche extérieure 18 tout au long de l'étape durant laquelle la couche extérieure 18 est descendue en direction de la base 8 sous l'effet de l'application d'une pression.

La troisième fonction de la structure 10 consiste à assurer le positionnement de l'élément électronique 14 et de la bobine 16 tout au long du procédé de fabrication d'une carte selon l'invention.

Dès que le matériau fusible de la structure 10, au moins partiellement fondu, remplit tout l'espace laissé libre par l'élément électronique 14 et la bobine 16 entre la base 8 et la couche extérieure 18, cet élément électronique 14 et cette bobine 16 sont entièrement noyés dans le matériau fusible de la structure 10 fondue, laquelle forme alors une masse compacte contenant l'élément électronique 14' et la bobine 16. Ainsi, la structure 10 initialement formée de pyramides 20 forme, après les étapes d'apport d'énergie et d'application d'une pression sur la couche extérieure 18, une masse définissant une couche intermédiaire entre la base 8 et la couche extérieure 18.

Finalement, une étape de solidification de cette masse est prévue et la presse servant à l'application d'une pression est retirée.

Le matériau fusible constituant la structure 10 peut être, par exemple, une résine ou un matériau plastique, ces exemples étant nullement limitatifs.

Pour ce qui concerne les matériaux constituant la base 8 et la couche extérieure 18, il est possible de considérer au moins trois cas différents en relation avec le matériau fusible constituant la structure 10 initialement apportée.

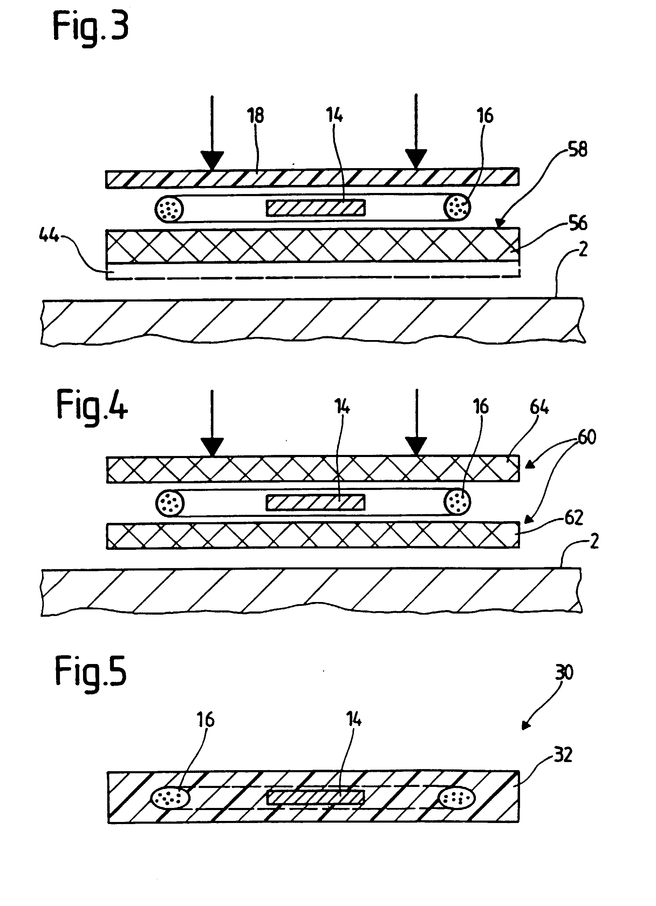

Dans un premier cas, le matériau constituant la base 8 et le matériau constituant la couche extérieure 18 sont sensiblement identiques au matériau fusible de la structure 10. Dans ce cas, la carte obtenue par ce premier mode de mise en oeuvre du procédé selon l'invention est représentée schématiquement à la figure 5. Sur cette figure 5, la carte 30 est constituée par une masse homogène 32 constituée par une résine solidifiée ou un matériau plastique, cette masse 32 englobant l'élément électronique 14 et la bobine 16.

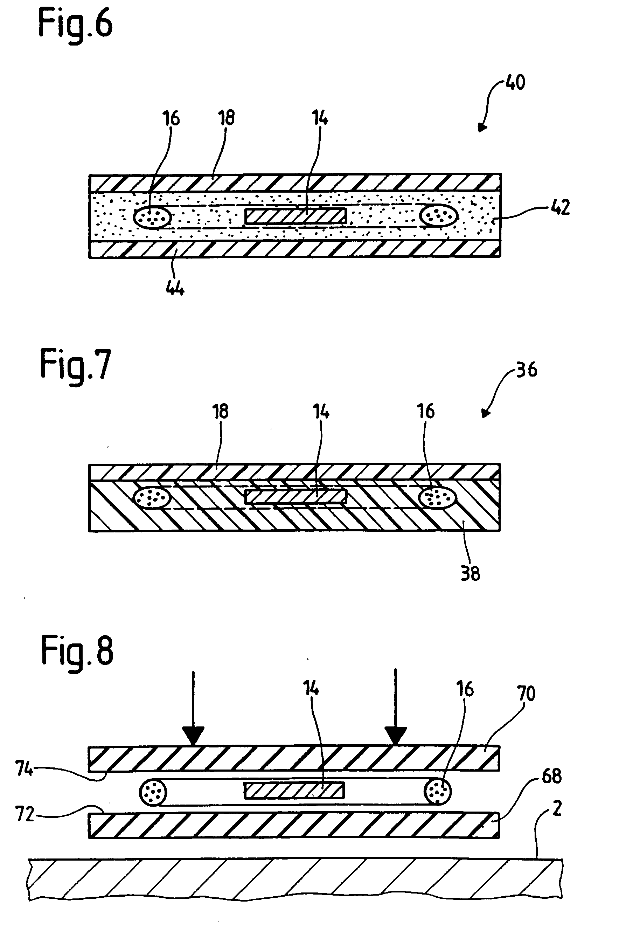

Dans un deuxième cas, le matériau constituant la base 8 est sensiblement identique au matériau fusible constituant la structure 10, alors que la couche extérieure 18 est constituée par un autre matériau ayant une température de fusion supérieure à celle du matériau fusible de la structure 10. Dans ce cas, la carte obtenue par le premier mode de mise en oeuvre du procédé selon l'invention est représentée schématiquement à la figure 7.

Sur cette figure 7 est représentée une carte 36 formée par une première couche 38 et une couche extérieure 18. L'élément électronique 14 et la bobine 16 sont noyées dans la couche 38, laquelle est formée par le matériau constituant le support 6 initialement apporté sur la surface de travail 2.

Dans ce cas, il est prévu que le matériau constituant la couche extérieure 18 et le matériau fusible constituant la couche 38 présentent la caractéristique de se lier solidement ensemble lors de l'étape de solidification du procédé selon l'invention. La carte 36 forme ainsi un tout compact englobant l'élément électronique 14 et la bobine 16 dans une zone interne correspondant sensiblement à la zone de positionnement définie par la structure 10.

Ce dernier fait peut être particulièrement avantageux pour certaines applications de la carte obtenue par le procédé selon l'invention dans lesquelles la localisation de la bobine au sein de la carte est nécessaire. Ensuite, si une étape de découpe finale du contour de la carte est prévue, il est possible d'effectuer cette découpe de telle manière que le contour prévu n'intercepte jamais la zone correspondant à la zone de positionnement initiale de l'élément électronique 14 et de la bobine 16. Ainsi, cette étape de découpe ne présente aucun risque d'endommagement de l'élément électronique 14 ou de la bobine 16. Ceci garantit que cette étape de découpe n'engendre pas de déchets de production. De plus, la bobine 16 et l'élément électronique 14 sont entièrement englobés dans la carte 36 selon l'invention.

Dans un troisième cas, le matériau fusible constituant la structure 10 est différent du matériau constituant la base 8 et du matériau constituant la couche extérieure 18, ce dernier matériau ayant une température de fusion supérieure à celle du matériau fusible de la structure 10. Dans ce cas-ci, la carte obtenue par le premier mode de mise en oeuvre du procédé selon l'invention est représentée schématiquement à la figure 6.

Sur cette figure 6, la carte 40 comprend une première couche extérieure 44 et une deuxième couche extérieure 18. La carte 40 comprend, entre les première et deuxième couches extérieures 44 et 18, une couche intermédiaire 42 formant une masse, constituée du matériau fusible de la structure 10, dans laquelle sont noyés l'élément électronique 14 et la bobine 16.

A nouveau, le matériau fusible formant la masse 42 de la couche intermédiaire et le matériau formant la base 8 et la couche extérieure 18 sont sélectionnés de telle manière que cette base 8 et cette couche extérieure 18 adhèrent solidement à la masse 42 après solidification de cette dernière lors du procédé de fabrication de cette carte selon l'invention. En particulier, le matériau constituant la masse 42 de la couche intermédiaire est une résine solidifiée ou un matériau plastique, ces exemples étant nullement limitatifs.

En se référant à la figure 2, on décrira ci-après une variante du premier mode de mise en oeuvre du procédé de fabrication d'une carte selon l'invention.

Selon cette variante, il est prévu d'apporter sur une surface de travail 2 définissant un plan 4 une première couche extérieure 44. Ensuite, une structure 46 est apportée et placée sur la couche extérieure 44. La structure 46 présente une ouverture principale 48 définissant une zone de positionnement 13.

Au moins un élément électronique 50 est ensuite placé à l'intérieur de la zone de positionnement 13. On notera ici que la structure 46 peut aussi être apportée postérieurement à l'apport de l'élément électronique 50. Ensuite, une couche extérieure 18 est apportée et disposée sur la structure 46 de telle manière que l'ouverture principale 48 est également recouverte par cette couche extérieure 18.

La structure 46 est une structure poreuse constituée par un matériau fusible. A titre d'exemple, cette structure 46 est formée par un matériau expansé comme une mousse ou par une structure alvéolée. La structure 46 définit un plan supérieur 24 sensiblement parallèle au plan 26 défini par la face supérieure 52 de la couche extérieure 44.

De manière similaire à la première variante décrite ci-avant, une presse est apportée sur la couche extérieure 18 de telle manière que cette couche extérieure 18 est maintenue en appui contre la structure 46 dans le plan 24 défini par cette dernière.

Une fois les divers éléments susmentionnés apportés, un apport d'énergie est prévu pour fondre au moins partiellement la structure 46. Parallèlement, une pression est appliquée à l'aide de la presse sur la couche extérieure 18 et en conséquence sur la structure 46. De ce fait, le matériau fusible constituant la structure 46 en fusion se répand dans l'ouverture principale 48 de manière à enrober l'élément électronique 50.

Afin de préserver les avantages mentionnés de la structure 10 représentés à la figure 1, il est prévu que la structure 46 définisse, entre son plan supérieur 24 et le plan 26 de la couche extérieure 44 sur laquelle elle est posée, un volume supérieur au volume de matériau fusible la constituant. Cette caractéristique est acquise par les exemples cités ci-avant, à savoir par un matériau expansé et une structure alvéolée. De ce fait, lors de la fusion de la structure 46, le matériau fusible constituant cette dernière peut se répandre dans la zone de positionnement 13 sans engendrer de surpression, l'air remplissant initialement cette zone de positionnement 13 pouvant s'évacuer latéralement à travers la structure 46.

La structure 46 est fondue de telle manière qu'elle forme finalement une masse 42 définissant une couche intermédiaire de la carte obtenue, comme cela est représenté à la figure 6.

A nouveau, les matériaux choisis pour les couches extérieures 18 et 44 sont compatibles avec le matériau fusible constituant la structure 46 de telle manière que ces matériaux se lient solidement les uns aux autres après l'étape de solidification de la masse 42 résultant de la fusion de la structure 46.

Selon deux cas différents de cette variante du mode de mise en oeuvre du procédé selon l'invention, les matériaux fusibles constituant les couches extérieures 18 et 44 peuvent être différents ou identiques aux matériaux fusibles constituant la structure 46.

On remarquera encore que la structure 46 telle que représentée sur la figure 2 forme une pièce séparée initialement de la couche extérieure 44. Cependant, il est aussi possible de prévoir un assemblage préalable de la couche extérieure 44 avec la structure 46.

En se référant à la figure 3 et aux figures 5 à 7 déjà décrites, on décrira ci-après un deuxième mode de mise en oeuvre du procédé de fabrication d'une carte selon l'invention.

Selon ce deuxième mode de mise en oeuvre, il est prévu d'apporter, sur la surface de travail 2, une structure 56. Dans une première variante, il est prévu d'apporter également une couche extérieure 44 assemblée préalablement avec la structure 56. Dans une deuxième variante, la couche extérieure 44 est omise.

Contrairement au premier mode de mise en oeuvre décrit ci-avant, la structure 56 ne présente pas de zone de positionnement initiale pour l'élément électronique 14 et la bobine 16. Ces derniers sont apportés sur la structure 56 et disposés sur sa face supérieure 58. Une couche extérieure 18 est ensuite apportée sur l'élément électronique 14 et la bobine 16 de manière que cette couche extérieure 18 est superposée à la structure 56.

Ensuite, une presse (schématisée par deux flèches) est apportée sur la couche extérieure 18 de manière à maintenir cette dernière en appui contre la bobine 16 et l'élément électronique 14.

La structure 56 est une structure poreuse formée par exemple par un matériau expansé ou par une structure alvéolée. En particulier, la structure 56 est formée par une mousse compressible.

Dans un premier cas, il est prévu, suite aux étapes susmentionnées, d'apporter premièrement de l'énergie sous forme de chaleur servant à ramollir la structure 56, puis d'exercer une pression sur l'élément électronique 14 et la bobine 16 de telle manière que ces derniers pénètrent dans la structure 56 en formant, dans une zone interne de cette dernière, leur propre logement. Ensuite, l'apport d'énergie sous forme de chaleur sert à fondre au moins partiellement la structure 56 et une pression est appliquée sur cette dernière de manière à former une masse compacte dans laquelle sont noyés l'élément électronique 14 et la bobine 16.

Dans un deuxième cas, la structure 56 présente la caractéristique d'être suffisamment compressible à température ambiante pour permettre la pénétration de l'élément électronique 14 et de la bobine 16 dans cette structure 56, sous l'effet de l'application d'une pression sur la couche extérieure 18 et par conséquent sur l'élément électronique 14 et la bobine 16, sans endommager ces derniers. Une fois l'élément électronique 14 et la bobine 16 ayant formé leur propre logement dans la structure 56 par écrasement ou par compression, un apport d'énergie servant à fondre au moins partiellement la structure 56 est prévu. Parallèlement à cet apport d'énergie, une pression est appliquée sur la structure 56 de telle manière que cette dernière forme, après fusion, une masse dans laquelle sont noyés l'élément électronique 14 et la bobine 16.

Ce deuxième cas est particulièrement avantageux étant donné que l'apport d'énergie servant à fondre au moins partiellement la structure 56 est apporté seulement une fois que la couche extérieure 18 est maintenue, à l'aide de la pression appliquée sur cette dernière, en appui contre la structure 56. De ce fait, le procédé, selon cette variante préférée du deuxième mode de mise en oeuvre, garantit, comme dans le premier mode de mise en oeuvre décrit ci-avant, que la couche extérieure 18 ne se rétracte pas ou ne se déforme pas sous l'effet de la chaleur apportée.

Une fois la masse formée par le matériau fusible de la structure 56 solidifiée, il résulte une carte telle que décrite à la figure 5, à la figure 6 ou à la figure 7 suivant que la couche extérieure 44 a été prévue ou non et suivant les matériaux choisis pour la couche extérieure 18, la structure 56 et la couche extérieure 44, le cas échéant.

En se référant ci-après à la figure 4 et à la figure 5 déjà décrite, on décrira une autre variante du deuxième mode de mise en oeuvre du procédé selon l'invention. Selon cette variante, il est prévu d'apporter une structure 60 formée de manière similaire à la structure 56 représentée à la figure 3, mais comportant une première partie 62 et une seconde partie 64.

La première partie 62 est premièrement apportée sur la surface de travail 2, puis l'élément électronique 14 et la bobine 16 sont apportés sur cette première partie 62. Ensuite, la seconde partie 64 de la structure 60 est apportée sur l'élément électronique 14 et la bobine 16.

A l'aide d'une presse, une pression est appliquée sur la seconde partie 64 de la structure 60 de telle manière que l'élément électronique 14 et la bobine 16 pénètrent dans la structure 60, la première partie 62 et la seconde partie 64 de cette structure 60 étant alors amenée en appui l'une contre l'autre.

La présente variante du deuxième mode de mise en oeuvre garantit que la masse, résultant de la fusion de la structure 60, englobe entièrement l'élément électronique 14 et la bobine 16 et forme une masse compacte. Après une étape de solidification, il résulte de cette variante une carte 30 telle que représentée à la figure 5.

On décrira ci-après un troisième mode de mise en oeuvre du procédé selon l'invention en se référant à la figure 8.

Selon ce troisième mode de mise en oeuvre du procédé selon l'invention, il est prévu d'apporter sur la surface de travail 2 une première couche solide 68 et une seconde couche solide 70. Un élément électronique 14 et une bobine 16 sont également apportés et disposés entre la première couche solide 68 et la seconde couche solide 70.

Les deux couches solides sont constituées par un matériau compressible thermo-durcissable. A titre d'exemple, ce matériau est du caoutchouc.

A l'aide d'une presse (schématisée par deux flèches), une pression est exercée sur les couches 68 et 70 de telle manière que l'élément électronique 14 et la bobine 16 pénètrent dans ces couches 68 et 70, ces dernières venant en appui l'une contre l'autre.

Ensuite, un apport d'énergie sous forme de chaleur est apporté aux deux couches 68 et 70 et ces dernières se durcissent. Afin d'assurer une bonne adhérence de la première couche 68 avec la seconde couche 70, le matériau thermo-durcissable et la quantité d'énergie apportée sont choisis de telle manière que, sous l'effet de l'apport d'énergie et de l'application d'une pression, les faces internes respectives 72 et 74 des deux couches 68 et 70 adhèrent solidement l'une à l'autre.

Après refroidissement, il résulte une carte compacte dans laquelle sont englobés l'élément électronique 14 et la bobine 16.

Dans une variante de ce troisième mode de mise en oeuvre, il est également possible de prévoir l'apport d'une ou deux couche(s) extérieure(s), tout comme dans le deuxième mode de mise en oeuvre du procédé selon l'invention.

Finalement, on remarquera que chacun des modes de mise en oeuvre décrits ci-avant est particulièrement bien adapté pour fabriquer simultanément sur la même surface de travail plusieurs cartes.

Pour ce faire, il est prévu d'apporter les structures mentionnées et les couches extérieures mentionnées sous forme de feuille ou de plaque dont les dimensions correspondent, en projection sur la surface de travail, à celle de plusieurs cartes disposées l'une à côté de l'autre.

Dans cette fabrication simultanée de plusieurs cartes, il est prévu une étape finale de découpe de chaque carte, le contour de découpe de chaque carte étant effectué de manière que celui-ci n'intercepte jamais une zone de positionnement ou une zone interne dans laquelle se trouve les divers éléments prévus et notamment une bobine.

## Revendications

1. Procédé de fabrication d'une carte, qui comporte un premier groupe d'étapes comportant les étapes suivantes :
B) apport, sur une surface de travail (2), d'au moins un élément électronique (14);
C) apport, sur ladite surface de travail (2), d'une structure (10;46;56;60) poreuse ou comprenant un relief dont les creux sont communicants, cette structure étant constituée d'un matériau fusible et définissant une zone de positionnement (12;13), et placement de cette structure de manière que ledit élément électronique est situé à l'intérieur de ladite zone de positionnement;
ce premier groupe d'étapes étant suivi d'un deuxième groupe d'étapes comportant les étapes suivantes :
F) apport d'énergie servant à fondre au moins partiellement ladite structure (10;46;56;60);
G) application d'une pression sur ladite structure en direction de ladite surface de travail (2) de telle manière que ledit matériau fusible constituant ladite structure forme une masse (32;42;38) dans laquelle est noyé ledit élément électronique;
ce deuxième groupe d'étapes étant suivi par une étape de solidification de ladite masse.

2. Procédé de fabrication d'une carte, qui comporte un premier groupe d'étapes comportant les étapes suivantes :
B) apport, sur une surface de travail (2), d'au moins un élément électronique (14);
C) apport, sur ladite surface de travail (2) d'une structure (56;60), compressible et constituée d'un matériau fusible, de manière que ledit élément électronique est superposé à cette structure et est situé à proximité de cette dernière;
ce premier groupe d'étapes étant suivi par un deuxième groupe d'étapes comportant les étapes suivantes :
E) application d'une pression sur ledit élément électronique (14) de manière que ce dernier pénètre au moins partiellement dans ladite structure (56;60);
F) apport d'énergie servant à fondre au moins partiellement ladite structure (56;60);
G) application d'une pression sur ladite structure en direction de ladite surface de travail de telle manière que ledit matériau fusible de ladite structure forme une masse (32;42;38) dans laquelle est noyé ledit élément électronique;
ce deuxième groupe d'étapes étant suivi par une étape de solidification de ladite masse.

3. Procédé selon la revendication 1 ou 2, caractérisé en ce que ledit premier groupe d'étapes comporte également l'étape suivante :
A) apport, sur ladite surface de travail (2), d'une couche extérieure (8;44) et placement de cette couche extérieure de manière que ledit élément électronique (14) et ladite structure (10;46;56;60) sont situés sur cette couche extérieure.

4. Procédé selon la revendication 1 ou 2, caractérisé en ce que ledit premier groupe d'étapes comporte également l'étape suivante :
D) apport d'une couche extérieure (18) et placement de cette couche extérieure sur ledit élément électronique (14) et sur ladite structure (10;46;56;60).

5. Procédé selon la revendication 3 ou 4, caractérisé en ce que lesdites étapes F et G servent également à lier solidement ladite couche extérieure (8;18;44) à ladite masse (38;42) une fois cette dernière solidifiée.

6. Procédé selon la revendication 3 ou 4, caractérisé en ce que ladite structure (10) forme avec ladite couche extérieure (8) une seule et même pièce (6).

7. Procédé selon la revendication 1, caractérisé en ce que ladite zone de positionnement est définie par une ouverture principale (48) prévue dans ladite structure (46).

8. Procédé selon la revendication 2, caractérisé en ce que ladite structure (60) comporte une première partie (62) et une seconde partie (64), ledit élément électronique (14) étant placé entre ces première et deuxième parties.

9. Procédé selon la revendication 1, caractérisé en ce que ladite surface de travail (2) est plane et en ce que ladite structure (10), une fois apportée, présente, dans un plan (26) sensiblement parallèle à ladite surface de travail (2), un relief dont les points extrêmes (22) définissent sensiblement un plan (24) parallèle à ladite surface de travail (2).

10. Procédé selon la revendication 9, caractérisé en ce que ledit relief est composé par un ensemble de pyramides (20).

11. Procédé selon la revendication 1 ou 2, caractérisé en ce que ladite structure (46;56;60) est formée par un matériau expansé.

12. Procédé selon la revendication 1 ou 2, caractérisé en ce que ladite structure (10;46;56;60) est constituée par une résine.

13. Procédé selon la revendication 1 ou 2, caractérisé en ce que ladite structure (10;46;56;60) est constituée par un matériau plastique.

14. Procédé selon la revendication 1 ou 2, caractérisé en ce qu'une bobine (16), reliée électriquement audit élément électronique (14), est également apportée avec ce dernier.

15. Procédé de fabrication d'une carte, qui comporte un premier groupe d'étapes comportant les étapes suivantes :
B) apport, sur une surface de travail, d'au moins un élément électronique (14);
C) apport, sur ladite surface de travail, de deux couches solides (68,70), constituées chacune d'un matériau compressible et thermo-durcissable, de manière que ledit élément électronique (14) est situé entre ces deux couches solides;
ce premier groupe d'étapes étant suivi par un deuxième groupe d'étapes comportant les étapes suivantes :
E) application d'une pression sur lesdites deux couches de manière que ledit élément électronique pénètre dans ces deux couches (68,70);
H) apport d'énergie servant à durcir ledit matériau compressible et thermo-durcissable de chaque couche solide (68,70) de manière à former une masse solide contenant ledit élément électronique.

16. Procédé selon la revendication 15, caractérisé en ce que ledit matériau compressible et thermo-durcissable est du caoutchouc.

17. Procédé selon la revendication 15 ou 16, caractérisé en ce qu'une bobine (16), reliée électriquement audit élément électronique (14), est également apportée avec ce dernier.

## Patentansprüche

1. Verfahren zur Herstellung einer Karte, das eine erste Gruppe von Schritten umfaßt, die die folgenden Schritte umfaßt:
B) Zuführen wenigstens eines elektronischen Elements (14) zu einer Arbeitsfläche (2);
C) Zuführen einer Struktur (10;46;56;60), die porös ist oder ein Relief umfaßt, dessen Vertiefungen miteinander in Verbindung stehen, zu der Arbeitsfläche (2), wobei diese Struktur aus einem schmelzbaren Material gebildet ist und einen Positionierbereich (12;13) definiert, und Anordnung dieser Struktur derart, daß das elektronische Element im Inneren des Positionierbereichs angeordnet ist;
wobei diese erste Gruppe von Schritten von einer zweiten Gruppe von Schritten gefolgt ist, die folgende Schritte umfaßt:
F) Zuführen von Energie, die dazu dient, wenigstens teilweise die Struktur (10;46;56;60) zu schmelzen;
G) Anwenden eines Drucks auf die Struktur in Richtung der Arbeitsfläche (2) derart, daß das schmelzbare Material, das die Struktur bildet, eine Masse (32;42;38) bildet, in der das elektronische Element eingebettet ist;
wobei diese zweite Gruppe von Schritten durch einen Schritt der Verfestigens der Masse gefolgt ist.

2. Verfahren zur Herstellung einer Karte, das eine erste Gruppe von Schritten umfaßt, die folgende Schritte umfaßt:
B) Zuführen wenigstens eines elektronischen Elements (14) zu einer Arbeitsfläche (2);
C) Zuführen einer kompressiblen und aus einem schmelzbaren Material gebildeten Struktur (56;60) zu der Arbeitsfläche (2) derart, daß das elektronische Element von dieser Struktur überlagert und benachbart zu dieser letzteren angeordnet ist;
wobei diese erste Gruppe von Schritten von einer zweiten Gruppe von Schritten gefolgt ist, die folgende Schritte umfaßt:
E) Anwenden eines Drucks auf das elektronische Element (14) derart, daß dieses letztere wenigstens teilweise in die Struktur (56;60) eindringt;
F) Zuführen von Energie, die dazu dient, die Struktur (56;60) wenigstens teilweise zu schmelzen;
G) Anwenden eines Drucks auf die Struktur in Richtung der Arbeitsfläche derart, daß das schmelzbare Material der Struktur eine Masse (32;42;38) bildet, in der das elektronische Element eingebettet ist;
wobei diese zweite Gruppe von Schritten von einem Schritt des Verfestigens der Masse gefolgt ist.

3. Verfahren nach Anspruch 1 oder 2, dadurch gekennzeichnet, daß die erste Gruppe von Schritten auch den folgenden Schritt umfaßt:
A) Zuführen einer Außenschicht (8;44) zu der Arbeitsfläche (2) und Anordnen dieser Außenschicht derart, daß das elektronische Element (14) und die Struktur (10;46;56;60) auf dieser Außenschicht angeordnet sind.

4. Verfahren nach Anspruch 1 oder 2, dadurch gekennzeichnet, daß die erste Gruppe von Schritten auch den folgenden Schritt umfaßt:
D) Zuführen einer Außenschicht (18) und Anordnen dieser Außenschicht auf dem elektronischen Element (14) und der Struktur (10;46;56; 60).

5. Verfahren nach Anspruch 3 oder 4, dadurch gekennzeichnet, daß die Schritte F und G gleichzeitig dazu dienen, die Außenschicht (8;18;44) mit der Masse (38;42), wenn diese letztere verfestigt ist, fest zu verbinden.

6. Verfahren nach Anspruch 3 oder 4, dadurch gekennzeichnet, daß die Struktur (10) mit der Außenschicht (8) ein einstückiges Teil (6) bildet.

7. Verfahren nach Anspruch 1, dadurch gekennzeichnet, daß der Positionierbereich durch eine Hauptöffnung (48), die in der Struktur (46) vorgesehen ist, definiert ist.

8. Verfahren nach Anspruch 2, dadurch gekennzeichnet, daß die Struktur (60) einen ersten Abschnitt (62) und einen zweiten Abschnitt (64) umfaßt, wobei das elektronische Element (14) zwischen diesen ersten und zweiten Abschnitten angeordnet wird.

9. Verfahren nach Anspruch 1, dadurch gekennzeichnet, daß die Arbeitsfläche (2) plan ist und daß die Struktur (10), einmal zugeführt, in einer Ebene (26) im wesentlichen parallel zu der Arbeitsfläche (2) ein Relief besitzt, dessen Extrempunkte (22) im wesentlichen eine Ebene (24) parallel zur Arbeitsfläche (2) definieren.

10. Verfahren nach Anspruch 9, dadurch gekennzeichnet, daß das Relief aus einer Gesamtheit von Pyramiden (20) zusammengesetzt ist.

11. Verfahren nach Anspruch 1 oder 2, dadurch gekennzeichnet, daß die Struktur (46;56;60) aus einem expandierten Material gebildet ist.

12. Verfahren nach Anspruch 1 oder 2, dadurch gekennzeichnet, daß die Struktur (10;46;56;60) aus einem Harz gebildet ist.

13. Verfahren nach Anspruch 1 oder 2, dadurch gekennzeichnet, daß die Struktur (10;46;56;60) aus einem Plastikmaterial gebildet ist.

14. Verfahren nach Anspruch 1 oder 2, dadurch gekennzeichnet, daß eine Bobine (16), die elektrisch mit dem elektronischen Element (14) verbunden ist, ebenfalls mit diesem letzteren zugeführt wird.

15. Verfahren zur Herstellung einer Karte, das eine erste Gruppe von Schritten umfaßt, die folgende Schritte umfaßt:
B) Zuführen wenigstens eines elektronischen Elements (14) zu einer Arbeitsfläche;
C) Zuführen von zwei festen Schichten (68,70) zu der Arbeitsfläche, die jeweils aus einem kompressiblen und thermoplastischen Material bestehen, derart, daß das elektronische Element (14) zwischen den beiden festen Schichten eingeordnet ist;
wobei diese erste Gruppe von Schritten von einer zweiten Gruppe von Schritten gefolgt ist, die folgende Schritte umfaßt:
E) Anwenden eines Drucks auf die beiden Schichten derart, daß das elektronische Element in die beiden Schichten (68,70) eindringt;
H) Zuführen von Energie, die dazu dient, das kompressible und thermoplastische Material jeder festen Schicht (68,70) zu härten, um eine feste, das elektronische Element enthaltende Masse zu bilden.

16. Verfahren nach Anspruch 15, dadurch gekennzeichnet, daß das kompressible und thermohärtbare Material Kautschuk ist.

17. Verfahren nach Anspruch 15 oder 16, dadurch gekennzeichnet, daß eine Bobine (16), die elektrisch mit dem elektronischen Element (14) verbunden ist, ebenfalls mit diesem letzteren zugeführt wird.

## Claims

1. Process for the manufacture of a card which has a first group of steps comprising the following steps :
B) the provision, on a working surface (2), of at least one electronic element (14);
C) the provision, on said working surface (2), of a structure (10;46;56;60) that is porous or comprises a relief, the hollows of which communicate, this structure being composed of a fusible material and defining a positioning zone (12;13), and placing of this structure so that said electronic element is located inside said positioning zone;
this first group of steps being followed by a second group of steps having the following steps :
F) the provision of energy serving to at least partially melt said structure (10;46;56;60);
G) the application of pressure to said structure in the direction of said working surface (2) so that said fusible material constituting said structure forms a mass (32;42;38) into which said electronic element is embedded; this second group of steps being followed by a step of solidification of said mass.

2. Process for the manufacture of a card which has a first group of steps having the following steps :
B) the provision, on a working surface (2), of at least one electronic element (14);
C) the provision, on said working surface (2) of a structure (56;60) that is compressible and composed of a fusible material so that said electronic element is superposed on this structure and is situated close to this latter;
this first group of steps being followed by a second group of steps having the following steps :
E) the application of pressure to said electronic element (14) so that this latter at least partially penetrates said structure (56;60);
F) the provision of energy serving to at least partially melt said structure (56;60);
G) the application of pressure to said structure in the direction of said working surface so that said fusible material of said structure forms a mass (32;42;38) in which said electronic element is embedded; this second group of steps being followed by a step of solidification of said mass.

3. Process according to claim 1 or 2, characterized in that said first group of steps also has the following step :
A) the provision, to said working surface (2), of an outer layer (8;44) and positioning of this outer layer so that said electronic element (14) and said structure (10;46;56;60) are located on this outer layer.

4. Process according to claim 1 or 2, characterized in that said first group of steps also has the following step :
D) the provision of an outer layer (18) and positioning of said outer layer onto said electronic element (14) and onto said structure (10;46;56;60).

5. Process according to claim 3 or 4, characterized in that said steps F and G also serve to firmly bind said outer layer (8;18;44) to said mass (38;42) once this latter has solidified.

6. Process according to claim 3 or 4, characterized in that said structure (10) forms a single and same piece (6) with said outer layer (8).

7. Process according to claim 1, characterized in that said positioning zone is defined by a main opening (48) provided in said structure (46).

8. Process according to claim 2, characterized in that said structure (60) has a first part (62) and a second part (64), said electronic element (14) being placed between these first and second parts.

9. Process according to claim 1, characterized in that said working surface (2) is planar and in that said structure (10), once applied, presents, in a plane (26) substantially parallel to said working surface (2), a relief, the extreme points of which (22) substantially define a plane (24) parallel to said working surface (2).

10. Process according to claim 9, characterized in that said relief is composed of an assembly of pyramids (20).

11. Process according to claim 1 or 2, characterized in that said structure (46;56;60) is formed of an expanded material.

12. Process according to claim 1 or 2, characterized in that said structure (10;46;56;60) is composed of a resin.

13. Process according to claim 1 or 2, characterized in that said structure (10;46;56;60) is composed of a plastics material.

14. Process according to claim 1 or 2, characterized in that a coil (16), electrically connected to said electronic element (14), is also provided with this latter.

15. Process for the manufacture of a card which has a first group of steps having the following steps :
B) the provision, on a working surface, of at least one electronic element (14);
C) the provision, on said working surface, of two solid layers (68;70) each composed of a compressible and thermosetting material, so that said electronic element (14) is situated between these solid layers;
this first group of steps being followed by a second group of steps having the following steps :
E) the application of pressure to said electronic element (14) so that this latter penetrates the two solid layers (68;70);
H) the provision of energy serving to harden said compressible and thermosetting material of each solid layer (68;70) so as to form a solid mass containing said electronic element.

16. Process according to claim 15, characterized in that said compressible and thermosetting material is rubber.

17. Process according to claim 15 or 16, characterized in that a coil (16), electrically connected to said electronic element (14), is also provided with this latter.
